# EUROPÄISCHE PATENTSCHRIFT

(11) **EP 1 867 186 B1**
(45) Veröffentlichungstag und Bekanntmachung des Hinweises auf die Patenterteilung: **02.06.2010**
(21) Anmeldenummer: 06725281.7
(22) Anmeldetag: 23.03.2006
(51) Int. Cl.: H04L 29/06, H04W 4/10

(54) **POC-KOMMUNIKATIONSSYSTEM, VERFAHREN ZUM ÜBERTRAGEN EINER POC-SIGNALISIERUNG UND/ODER VON POC-DATEN SOWIE SERVERVORRICHTUNG DAFÜR**
POC COMMUNICATION SYSTEM, METHOD FOR TRANSMITTING A POC SIGNALLING AND/OR POC DATA, AND A SERVER DEVICE THEREFOR
SYSTEME DE COMMUNICATION POC, PROCEDE DE TRANSMISSION D'UNE SIGNALISATION POC ET/OU DE DONNEES POC ; DISPOSITIF SERVEUR CORRESPONDANT

(30) Priorität: 30.03.2005 DE 102005014519
(43) Veröffentlichungstag der Anmeldung: 19.12.2007
(73) Patentinhaber: Nokia Siemens Networks GmbH & Co. KG, 81541 München (DE)
(72) Erfinder: NAUMANN, Mirko, 82538 Geretsried (DE)
(86) Internationale Anmeldenummer: PCT/EP2006/061004
(87) Internationale Veröffentlichungsnummer: WO 2006/103197

(56) Entgegenhaltungen:
- US-A1- 2004 032 843
- US-A1- 2004 190 468
- US-A1- 2004 202 117
- OMA OPEN MOBILE ALLICANCE: "Push to talk over Cellular (PoC) - Architecture Draft Version 1.0 Open Mobile Alliance OMA-AD_PoC-V1_0-20041117-D" OMA DRAFT, 17. November 2004 (2004-11-17), XP002372965 in der Anmeldung erwähnt
- RAKTALE S K: "3PoC : an architecture for enabling push to talk services in 3GPP networks" PERSONAL WIRELESS COMMUNICATIONS, 2005. ICPWC 2005. 2005 IEEE INTERNATIONAL CONFERENCE ON NEW DELHI, INDIA JAN. 23-25, 2005, PISCATAWAY, NJ, USA,IEEE, 23. Januar 2005 (2005-01-23), Seiten 202-206, XP010798546 ISBN: 0-7803-8964-6

## Beschreibung

Die Erfindung bezieht sich auf ein PoC-Kommunikationssystem mit den oberbegrifflichen Merkmalen des Patentanspruchs 1, auf ein Verfahren zum Übertragen einer PoC-Signalisierung und/oder von PoC-Daten mit den oberbegrifflichen Merkmalen des Patentanspruchs 10 bzw. auf eine Servervorrichtung dafür mit den Merkmalen des Patentanspruchs 22.

US 2004/0190468 A1 betrifft ein Gruppenkommunikations-Gateway zwischen einem "Direct-Mode"-Netzwerk und einem paketbasierten Gruppenkommunikationsdienst in einem zellularen Netzwerk.

Push-to-talk-over-Cellular (PoC, Tastendruck zum Sprechen über ein zellulares Kommunikationssystem) ist ein auf dem Internetprotokoll (IP) basierender Dienst zur Kommunikation zweier oder mehrerer Teilnehmerstationen, insbesondere Mobilfunkgeräte, in einem zellularen Kommunikationssystem. PoC erfolgt hinsichtlich der Bedienung der Teilnehmerstationen wie bei einem Walkie-Talkie. In diesem Modus kann zu einer bestimmten Zeit immer nur ein Teilnehmer über seine Teilnehmerstation sprechen, wobei alle anderen Teilnehmer über deren Teilnehmerstationen, welche an der entsprechenden PoC-Session (PoC-Sitzung) teilnehmen, dem sprechenden Teilnehmer zuhören können. Das heißt, alle Teilnehmer können dessen Sprachdatenstrom (Voice-Stream) empfangen. Will ein Teilnehmer sprechen, muss er dies durch Drücken einer entsprechend vorgesehenen Push-to-Talk-(P2T)-Taste seiner Teilnehmerstation signalisieren und warten, bis seine Teilnehmerstation einen entsprechenden Token (Signalisierung des Rechtes zum Sprechen) zugeteilt bekommt. Von einer Vielzahl von Teilnehmerstationen einer gemeinsamen PoC-Session bekommt immer nur eine einzige Teilnehmerstation den Token. Erst nach dem Loslassen der P2T-Taste an der den Token innehabenden Teilnehmerstation durch den Teilnehmer wird der Token freigegeben und kann neu zugeteilt werden. Anschließend werden alle Token-Anforderungen nach dem First-Come-First-Serve-Prinzip bedient, das heißt der Token wird derjenigen Teilnehmerstation zugewiesen, welche diesen zuerst anfordert. Es gibt auch die Möglichkeit zur Priorisierung, was eine andere Reihenfolge erzeugen würde. Es gibt eine Vielzahl von Anwendungsfällen für den PoC-Dienst. Beispielsweise können kurze Terminabsprachen zwischen mehreren Teilnehmern über PoC vorgenommen werden. Vorteilhafte Anwendungen sind auch im Außenbereich zur Abstimmung von Gruppen möglich, wobei beispielsweise Radfahrergruppen, Mountainbiker oder Wanderer PoC-Sessions verwenden können. Besonders vorteilhaft an dieser Technologie ist, dass solche Sessions den ganzen Tag laufen können, ohne Kosten zu verursachen, da im Standby-Modus (Ruhezustand) mit Bereitschaft zum Empfang keine Daten ausgetauscht werden.

Grundlagen zu PoC finden sich in dem entsprechenden Standard "OMA Push to talk Over Cellular V1.0" (OMA: Open Mobile Alliance).

Für die Benutzung dieses neuen Dienstes sind Teilnehmerstationen mit einem IMS-Client (IMS: IP Multimedia Subsystem) auf diesem Endgerät erforderlich. Nachteilhaft ist, dass der Dienst daher für die bereits länger auf dem Markt befindlichen Mobilfunkgeräte sowie den größten Teil der derzeit auf dem Markt angebotenen Mobilfunkgeräte nicht nutzbar ist, weshalb sich der PoC-Dienst für die Mobilfunkbereiche nicht schnell zu einem wirtschaftlichen Erfolg umsetzen lassen kann. Für Festnetzgeräte sind Umsetzungen gar nicht bekannt. Letztendlich ist die schnelle Umsetzbarkeit aber wichtig für die Investitionsentscheidungen, IMS auf den Teilnehmerstationen bereitzustellen.

Die Aufgabe der Erfindung besteht darin, den PoC-Dienst derart weiterzuentwickeln, dass eine breitere Nutzbarkeit seitens interessierter Teilnehmer ermöglicht wird.

Diese Aufgabe wird durch ein PoC-Kommunikationssystem mit den Merkmalen des Patentanspruchs 1, durch ein Verfahren zum Übertragen einer PoC-Signalisierung und/oder zum Übertragen von PoC-Daten mit den Merkmalen des Patentanspruchs 10 bzw. durch eine Servervorrichtung dafür mit den Merkmalen des Patentanspruchs 22 gelöst.

Besonders bevorzugt wird demgemäß ein PoC-Kommunikationssystem (PoC: Push To Talk Over Cellular) mit einem PoC-Server zum Koordinieren einer PoC-Kommunikation zwischen PoC-fähigen Teilnehmerstationen, mit einem Server zum Aufbauen und Koordinieren von IP-basierten Verbindungen im Kommunikationssystem, und mit einer Servervorrichtung mit einer ersten Schnittstelle als einer PoC-Schnittstelle zum Austauschen von PoC-bezogenen Signalisierungen und PoC-bezogenen Daten in Art eines PoC-Client, einer zweiten Schnittstelle zum Austauschen von nicht-PoC-System-basierter Signalisierung und Daten einer Sprachkommunikationsverbindung und einer Umsetzungseinrichtung zum Erzeugen von Signalisierung und Daten einer Sprachkommunikationsverbindung und Ausgeben dieser über die zweite Schnittstelle zum Empfang durch eine eigenständig nicht-PoC-fähige Teilnehmerstation nach Empfang von IP-basierter PoC-Signalisierung (IP: Internet Protokoll) bzw. PoC-Daten durch die erste PoC-Schnittstelle und/oder zum Erzeugen von IP-basierter PoC-Signalisierung und PoC-Daten zum Ausgeben dieser über die erste PoC-Schnittstelle an das PoC-Kommunikationssystem nach Empfang von Signalisierung und/oder Daten für PoC-Übertragungen durch die zweite Schnittstelle, so dass die eigenständig nicht-PoC-fähige Teilnehmerstation für eine PoC-Kommunikation über das PoC-Kommunikationssystem einsetzbar ist.

Besonders bevorzugt wird demgemäß außerdem ein Verfahren zum Übertragen einer PoC-Signalisierung und/oder von PoC-Daten, insbesondere zum Steuern einer Servervorrichtung eines solchen PoC-Kommunikationssystems, bei dem eine PoC-Kommunikations-Verbindung zwischen PoC-Clienten aufgebaut wird zum Übertragen von PoC-Daten mit Sprachinformationsgehalt für Sprachübertragung und durch zumindest einen solcher PoC-Clienten über eine PoC-Schnittstelle PoC-Signalisierung und/oder PoC-Daten der PoC-Kommunikations-Verbindung gesendet und/oder empfangen werden, wobei durch den Client über eine zweite Schnittstelle Signalisierungen und/oder Daten an eine nicht-PoC-fähige Teilnehmerstation gesendet und/oder empfangen werden und der Client abhängig von Signalisierungen und/oder Daten der einen der Schnittstellen geeignete Signalisierungen und/oder Daten der anderen der Schnittstellen erzeugt, um die nicht-PoC-fähige Teilnehmerstation zum Senden und/oder Empfangen von Pseudo-PoC-Kommunikation anzusteuern.

Besonders bevorzugt wird demgemäß außerdem eine Servervorrichtung zum Anschließen einer eigenständig nicht-PoC-fähigen Teilnehmerstation eines Kommunikationsnetzes für eine Pseudo-PoC-Kommunikation an ein PoC-Kommunikationssystem, insbesondere eine solche Servervorrichtung und/oder ein solcher Client zum Durchführen eines solchen Verfahrens mit einer ersten Schnittstelle als einer PoC-Schnittstelle zum Aufbauen einer PoC-Verbindung zu dem PoC-Kommunikationssystem in Art eines PoC-Clienten, einer zweiten Schnittstelle zum Aufbauen einer Pseudo-PoC-Verbindung zu der eigenständig nicht-PoC-fähigen Teilnehmerstation in Art einer Sprachkommunikationsverbindung und einer Umsetzungseinrichtung zum Umsetzen von PoC-Signalisierungen und PoC-Daten der PoC-Verbindung in Signale und Daten der Pseudo-PoC-Verbindung und umgekehrt.

Bereitgestellt wird somit eine eigenständige Servervorrichtung, welche als Bestandteil eines IP-Netzes oder als eigenständige Komponente in Art eines Adapters bei einem Teilnehmer bereitstellbar ist. Diese Servervorrichtung ermöglicht mit einer Umsetzungseinrichtung den Anschluss herkömmlicher Teilnehmerstationen ohne PoC-Fähigkeit, das heißt insbesondere ohne einen IMS-Client. Entsprechend umfasst die Servervorrichtung die Funktionalität eines PoC-fähigen Client bzw. einer PoC-fähigen Teilnehmerstation zum Austauschen von PoC-Signalisierungen und PoC-Daten über eine PoC-Schnittstelle mit den weiteren Komponenten des PoC-Kommunikationssystems. Außerdem stellt der Client bzw. eine mit dem Client verbundene Steuereinrichtung Signalisierungen und Daten bereit, welche verfahrensgemäß die Einsetzbarkeit einer nicht-PoC-fähigen Teilnehmerstation für den PoC-Dienst über eine weitere Schnittstelle ermöglichen. Über die weitere Schnittstelle wird somit eine Ansteuerung eines herkömmlichen Telefons oder eines herkömmlichen Mobilfunkgerätes derart vorgenommen, dass diese eigenständig nicht-PoC-fähigen Teilnehmerstationen PoC-fähig bzw. Pseudo-PoC-fähig werden.

Eine solche Servervorrichtung ist bereitstellbar als an das PoC-Kommunikationssystem anschließbare oder darin eingliederbare Komponente. Außerdem kann eine solche Servervorrichtung vor, in oder hinter einem eigentlich nicht PoC-fähigen Telekommunikationssystem von dessen Netzbetreiber oder ggf. sogar von einem Telefonbenutzer eingesetzt werden.

Ermöglicht wird somit der Einsatz "normaler" nicht-PoCfähiger Telefone mittels einer Servervorrichtung in Art eines Gateway-Servers für PoC-Anwendungsfälle. Dadurch bleibt PoC nicht mehr zwingend einer begrenzten Anzahl von PoC-fähigen Endgeräten vorbehalten. Außerdem wird die Einsetzbarkeit auch für Teilnehmergruppen verfügbar, welche beispielsweise wegen fehlender Netzabdeckung oder in z.B. einem Krankenhaus aus Sicherheitsgründen ansonsten nicht bedient werden könnten.

Durch eine breitere Basis von potentiellen Teilnehmern wird die Attraktivität des PoC-Dienstes erhöht. Die Servervorrichtung kann als ein neues Netzelement mit einfach erkennbarem Mehrwert durch einen Operator eines Mobilfunksystems verkauft werden. Durch die Verfügbarkeit einer solchen Servervorrichtung verbreitert sich die Basis der möglichen PoC-Anwender erheblich, so dass der PoC-Dienst schnell auch in Bereichen angeboten werden kann, in denen Mobiltelefone nicht nutzbar sind, da die Einsetzbarkeit auch von leitungsgebundenen herkömmlichen Telefonen ermöglicht wird. Entsprechend ist PoC auch in Bereichen nutzbar, in denen Mobiltelefone nicht benutzt werden können oder dürfen. Mit einem üblichen Festnetzanschluss kann über herkömmliche Telefone an PoC-Sessions teilgenommen werden.

Vorteilhafte Ausgestaltungen sind Gegenstand von abhängigen Ansprüchen.

Bevorzugt wird insbesondere ein solches PoC-Kommunikationssystem mit Servern zur SIP-basierten (SIP: Session Initiation Protocol) Signalisierung zum Verbindungsaufbau und zur RTP-Datenübertragung zur Sprachdatenübertragung (RTP: Real time Transport Protocol).

Bevorzugt wird insbesondere ein solches PoC-Kommunikationssystem, bei dem die nicht-PoC-fähige Teilnehmerstation ein Telefon eines leitungsgebundenen Telefonnetzes ist oder ein Mobilfunkgerät eines Mobilfunknetzes ist.

Bevorzugt wird insbesondere ein solches PoC-Kommunikationssystem, bei dem die Umsetzungseinrichtung mit PoC-Funktionalität als PoC-Client für die PoC-Kommunikation über die PoC-Schnittstelle und mit Telefon- oder Mobilfunktelefon-Funktionalität für eine Pseudo-PoC-Kommunikation über die zweite Schnittstelle ausgebildet ist.

Bevorzugt wird insbesondere ein solches PoC-Kommunikationssystem, bei dem die Umsetzungseinrichtung einen Zeitgeber zum Beschränken der Dauer einer Verbindung zu der nicht-PoC-fähigen Teilnehmerstation aufweist.

Bevorzugt wird insbesondere ein solches PoC-Kommunikationssystem mit einem Speicher zum Zwischenspeichern von PoC-Daten für die nicht-PoC-fähige Teilnehmerstation bis zum Aufbau einer Sprachkommunikations-Verbindung als Pseudo-PoC-Verbindung.

Bevorzugt wird insbesondere ein solches PoC-Kommunikationssystem mit einem Mehrfrequenzton-Modul zum Empfangen von Mehrfrequenztonsignalen über die zweite Schnittstelle und zum Analysieren der Mehrfrequenztonsignale als Pseudo-PoC-Steuersignale der nicht-PoC-fähigen Teilnehmerstation.

Bevorzugt wird insbesondere ein solches PoC-Kommunikationssystem mit einem Sprach-Analyse-Modul zum Empfangen von Sprache über die zweite Schnittstelle und zum Analysieren der Sprache als Pseudo-PoC-Steuersignal der nicht-PoC-fähigen Teilnehmerstation.

Bevorzugt wird insbesondere ein solches Verfahren, bei dem Signalisierungen und Daten für eine SprachkommunikationsVerbindung erzeugt und über die zweite Schnittstelle ausgegeben werden aufgrund von IP-basierter PoC-Signalisierung und/oder IP-basierter PoC-Daten, welche über die PoC-Schnittstelle empfangen werden.

Bevorzugt wird insbesondere ein solches Verfahren, bei dem eine PoC-Signalisierung und/oder PoC-Daten für eine PoC-Kommunikations-Verbindung erzeugt und über die PoC-Schnittstelle ausgegeben werden aufgrund von Signalen und/oder Daten einer Sprachkommunikations-Verbindung, welche über die zweite Schnittstelle empfangen werden.

Bevorzugt wird insbesondere ein solches Verfahren, bei dem gegenüber der PoC-Kommunikations-Verbindung PoC-Signalisierung und/oder PoC-Daten empfangen und in Art eines PoC-Client verarbeitet werden und umgesetzt werden in Signalisierungen und Daten für ein eigenständig nicht-PoC-fähiges Festnetztelefon als der nicht-PoC-fähigen Teilnehmerstation (T2), insbesondere für ein ISDN-Telefon.

Bevorzugt wird insbesondere ein solches Verfahren, bei dem gegenüber der PoC-Kommunikations-Verbindung PoC-Signalisierung und/oder PoC-Daten empfangen und in Art eines PoC-Client verarbeitet werden und umgesetzt werden in Signalisierungen und Daten für ein eigenständig nicht-PoC-fähiges Mobilfunkgerät als der nicht-PoC-fähigen Teilnehmerstation.

Bevorzugt wird insbesondere ein solches Verfahren, bei dem über die zweite Schnittstelle zum nachfolgenden Übertragen von PoC-Daten eine leitungsgebundene Telefonverbindung, insbesondere eine Sprach-Kommunikations-Verbindung zur nicht-PoC-fähigen Teilnehmerstation aufgebaut wird und nachfolgend PoC-Daten an die Teilnehmerstation weitergeleitet werden.

Bevorzugt wird insbesondere ein solches Verfahren, bei dem zum Aufbau einer Telefonverbindung, insbesondere Sprach-Kommunikations-Verbindung eine für PoC-Kommunikations-Verbindungen reservierte und zugeteilte zweite Telefonnummer der eigenständig nicht-PoC-fähigen Teilnehmerstation angewählt wird.

Bevorzugt wird insbesondere ein solches Verfahren, bei dem eine angewählte Telefonnummer, insbesondere die zweite Telefonnummer einer automatischen Rufannahme-Funktion der eigenständig nicht-PoC-fähigen Teilnehmerstation zugeordnet ist.

Bevorzugt wird insbesondere ein solches Verfahren, bei dem zwischen dem Client und der eigenständig nicht-PoC-fähigen Teilnehmerstation eine Telefonverbindung nur für eine Dauer tatsächlich zur Übertragung vorliegender PoC-Daten und/oder im Falle des Ausbleibens von in einer der Übertragungsrichtungen übertragener Daten und/oder Signalisierungen nur für eine vorgegebene Dauer aufgebaut wird.

Bevorzugt wird insbesondere ein solches Verfahren, bei dem durch den Clienten empfangene PoC-Daten zwischengespeichert werden bis zum Aufbau einer Telefonverbindung zu der eigenständig nicht-PoC-fähigen Teilnehmerstation.

Bevorzugt wird insbesondere ein solches Verfahren, bei dem der Client von der eigenständig nicht-PoC-fähigen Teilnehmerstation empfangene Signale, insbesondere Mehrfrequenztonsignale als Steuersignale zum Aufbauen, Verwalten oder Beenden einer PoC-Kommunikations-Verbindung interpretiert und entsprechende PoC-Signalisierungen und/oder PoC-Daten erzeugt und über die PoC-Schnittstelle austauscht.

Bevorzugt wird insbesondere ein solches Verfahren, bei dem der Client von der eigenständig nicht-PoC-fähigen Teilnehmerstation empfangene Sprachsignale, insbesondere Sprachdaten analysiert und vorbestimmte Sprachanweisungen als Steuersignale zum Aufbauen, Verwalten oder Beenden einer PoC-Kommunikations-Verbindung interpretiert und entsprechende PoC-Signalisierungen und/oder PoC-Daten erzeugt und über die PoC-Schnittstelle austauscht.

Ein Ausführungsbeispiel wird nachfolgend anhand der Zeichnung näher erläutert. Es zeigt:

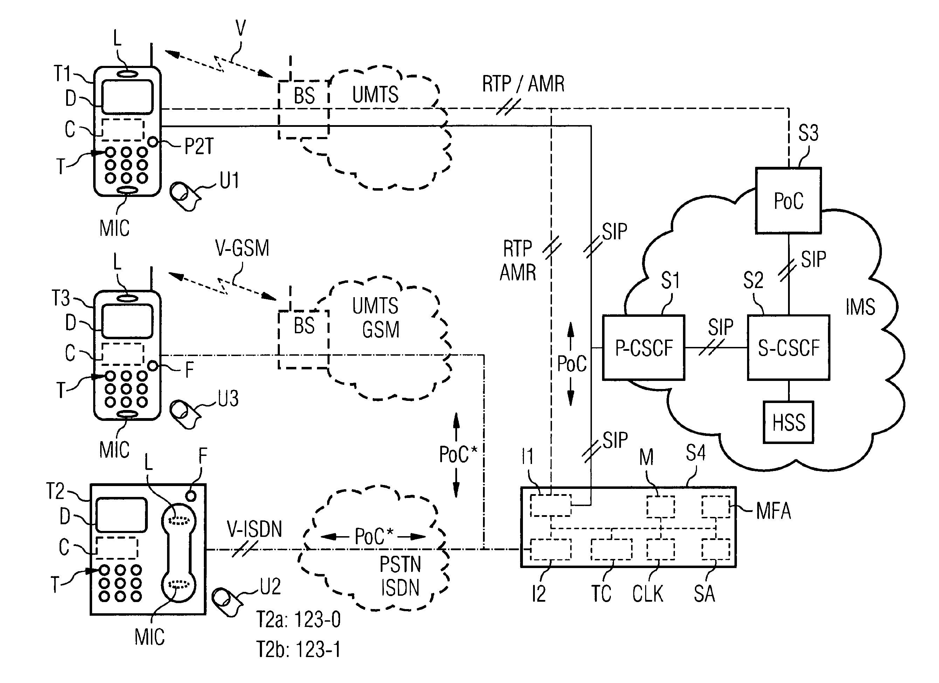

- Fig. 1: schematisch eine beispielhafte Anordnung einzelner Komponenten eines PoC-Kommunikationssystems, wobei auch eigenständig nicht-PoC-fähige Teilnehmerstatio- nen in den PoC-Dienst eingebunden sind.

Wie aus Fig. 1 ersichtlich, wirken in einem PoC-Kommunikationssystem verschiedenartige Komponenten und Funktionen zum Bereitstellen des PoC-Dienstes zusammen. Dargestellt sind aus einer Vielzahl weiterer erforderlicher Komponenten lediglich diejenigen Komponenten, welche für die Erläuterung des vorliegenden Konzeptes vorteilhaft sind. Natürlich sind einzelne Komponenten durch andere entsprechend geeignete Komponenten oder Systeme austauschbar, wie beispielsweise zwischengeschaltete Funknetze UMTS, über welche PoC-fähige Teilnehmerstationen T1 mit den Netzkomponenten des Netzes des IMS-Kommunikationssystems IMS kommunizieren. Beispielsweise kann es sich bei der PoC-fähigen Teilnehmerstation T1 um ein Endgerät mit einer Funkschnittstelle V handeln, welche über eine Basisstation BS eines UMTS-Mobilfunknetzes kommuniziert. Möglich wäre aber auch der Einsatz in einem Mobilfunknetz eines anderen entsprechend geeigneten Standards oder der Einsatz in einem lokalen Funk-Datennetz (WLAN, Wireless Local Area Network).

Bei der beispielhaft dargestellten PoC-fähigen Teilnehmerstation T1 handelt es sich um ein Endgerät mit einem IMS-Client, welcher die Nutzung des PoC-Dienstes ermöglicht. In üblicher Art und Weise umfasst die Teilnehmerstation T1 eine Tastatur T zur Eingabe von Ziffern und Buchstaben, ein Mikrofon MIC zur Eingabe von Sprache, einen Lautsprecher L zum Ausgeben von akustischen Signalen und Sprache, ein Display als Anzeigeeinrichtung D zum Anzeigen von Texten und/oder Bildern sowie einen Prozessor als zentrale Steuereinrichtung C zum Steuern der Funktionalität der Teilnehmerstation T1. Zum Ermöglichen des PoC-Dienstes weist die PoC-fähige Teilnehmerstation T1 außerdem eine P2T-Taste P2T auf. Die P2T-Taste ist durch den Benutzer bzw. Teilnehmer U1 der Teilnehmerstation T1 zum Anfordern eines Token, das heißt zum Anfordern der Sprechberechtigung im PoC-Dienst, und zum Behalten des Token zu drücken.

Gemäß den derzeitigen Konzepten für den PoC-Dienst werden für den Aufbau einer PoC-Verbindung zwischen der Teilnehmerstation T1 und dem IMS-Kommunikationssystem IMS zwei Verbindungen aufgebaut, nämlich eine Signalisierungsverbindung gemäß SIP (Session Initiation Protocol, Sitzungs-Initialisierungs-Protokoll) und eine Datenverbindung gemäß RTP/AMR (Real Time Transport Protocol / Adaptive Multi Rate, Echtzeit-Transportprotokoll / Adaptive-Mulitrate) für die Übertragung von Teilnehmerdaten, insbesondere Sprachdaten.

Das IMS-Kommunikationssystem IMS verwendet vorzugsweise bereits für sich bekannte Komponenten eines IP-basierten Netzes mit einem IMS-Proxy-Server S1 zum Bereitstellen einer Proxy-Control State Control Function P-CSCF (Proxy-Steuerzustands-Steuerfunktion) und mit einem IMS-Serving-Server S2 zum Bereitstellen einer Service-Control State Control Function S-CSCF (Dienste-Steuerzustands-Steuerfunktion), welche über insbesondere SIP-Verbindungen untereinander verbunden sind. Der IMS-Serving-Server S2 ist außerdem üblicherweise mit einer Benutzerdatenbank HSS verbunden, um Autorisierungen und Authentisierungen von sich anmeldenden Teilnehmerstationen T1 sowie deren momentanen Aufenthaltsort überprüfen zu können. Das IMS-Kommunikationssystem IMS weist außerdem einen PoC-Server S3 auf, welcher mit dem IMS-Serving-Server S2 über üblicherweise eine SIP-Verbindung verbunden ist.

Zum Aufbauen einer PoC-Session nimmt die Teilnehmerstation T1 über die Signalisierungsverbindung SIP Kontakt mit dem IMS-Proxy-Server S1 auf. Für die Übertragung von Nutzerdaten, insbesondere Sprachdaten wird eine ebenfalls IP-basierte Verbindung über die Datenverbindung RTP / AMR zwischen der Teilnehmerstation T1 und dem PoC-Server S3 aufgebaut. Der PoC-Server S3 koordiniert die verschiedenen Teilnehmer einer aufgebauten PoC-Session sowie die Vergabe des Token an eine der Teilnehmerstationen T1 der PoC-Session. Die PoC-Session kann dabei durch die erste PoC-fähige Teilnehmerstation T1 zu einer anderen PoC-fähigen Station aufgebaut werden, wobei der Teilnehmer U1 der Teilnehmerstation T1 einen gewünschten anderen Teilnehmer aus einem Adressbuch der Teilnehmerstation T1 oder durch direkte Anwahl per Tastatur T auswählen kann. Prinzipiell möglich ist auch das Einklinken in eine bereits bestehende PoC-Session, sofern dazu die Berechtigung aufgrund beispielsweise einer zuvor definierten Gruppenzugehörigkeit besteht. Vorzugsweise kann eine Vielzahl verschiedener Teilnehmerstationen T1 an einer einzigen PoC-Session teilnehmen.

Zur Erweiterung des Kreises der Benutzer bzw. Teilnehmer U2, U3 mit nicht-PoC-fähigen Teilnehmerstationen T2, T3, welchen eine solche Funktionalität ermöglicht werden soll, wird dem System eine Servervorrichtung S4 zugefügt, welche vorzugsweise in Art eines Gateway-Servers ausgestaltet ist. Die Servervorrichtung S4 weist eine erste Schnittstelle als eine PoC-Schnittstelle I1 zum Austauschen von PoC-bezogenen Signalisierungen und Daten in Art einer PoC-Teilnehmerstation mit einer PoC-Client-Funktionalität auf. Die PoC-Schnittstelle I1 ermöglicht somit den Aufbau einer Signalisierungsverbindung SIP und einer Nutzdatenverbindung RTP/AMR als IP-basierte Verbindungen zu dem IMS-Kommunikationssystem IMS. Gegenüber dem IMS-Kommunikationssystem IMS erscheint die Servervorrichtung S4 sowohl baulich als auch funktionell wie ein IMS-Client der PoC-fähigen Teilnehmerstation T1.

Die Servervorrichtung S4 weist außerdem eine zweite Schnittstelle als eine Schnittstelle I2 zum Austausch von nicht-PoC-System-basierten Signalisierungen und Daten einer Sprachkommunikationsverbindung auf. An dieser zweiten Schnittstelle I2 sind übliche, eigenständig nicht-PoC-fähige Teilnehmerstationen direkt oder über entsprechend zwischengeschaltete Kommunikationssysteme PSTN, ISDN, UMTS, GSM mit der Servervorrichtung S4 verbindbar. Über diese zweite Schnittstelle I2 werden entsprechend Signalisierungen und Daten in einer Art und Weise ausgetauscht, dass die eigenständig nicht-PoC-fähigen Teilnehmerstationen T2, T3 über die Servervorrichtung S4 an den PoC-Dienst und das IMS-PoC-Kommunikationssystem IMS zur Teilnahme am PoC-Dienst angeschlossen werden können.

Bei der ersten beispielhaften nicht-PoC-fähigen Teilnehmerstation T2 handelt es sich um ein übliches leitungsgebundenes Telefon mit einer Tastatur T, einem Prozessor C, einer Anzeigeeinrichtung D und einem Hörer mit einem Mikrofon MIC und einem Lautsprecher L. Außerdem weisen solche Telefone üblicherweise Funktionstasten F auf. Der Anschluss an ein Telefonnetz erfolgt beispielsweise über eine analoge Verbindung zu einem analogen Telefonnetz PSTN oder über eine ISDN-Verbindung V-ISDN zu einem ISDN-Telefonnetz. Aus Sicht dieses Telefones als der Teilnehmerstation T2 erscheint die Servervorrichtung S4 wie ein weiteres herkömmliches Telefon als Teilnehmer des entsprechenden Telefonnetzes PSTN, ISDN.

Die zweite beispielhafte nicht-PoC-fähige Teilnehmerstation T3 ist ein Mobilfunkgerät, welches über eine FunkSchnittstelle V-GSM und eine Basisstation BS über ein Mobilfunknetz GSM, UMTS kommuniziert. In üblicher Art und Weise weist diese zweite nicht-PoC-fähige Teilnehmerstation T3 eine Tastatur T, eine Steuereinrichtung C, eine Anzeigeeinrichtung D, ein Mikrofon MIC und einen Lautsprecher L sowie üblicherweise eine oder mehrere Funktionstasten F auf. Aus Sicht dieser Teilnehmerstation T3 erscheint die Servervorrichtung S4 wie eine weitere Teilnehmerstation des Mobilfunknetzes GSM, UMTS.

Signalisierungen und Sprachdaten einer PoC-Verbindung in Art einer Pseudo-PoC-Verbindung PoC* werden zwischen den nicht-PoC-fähigen Teilnehmerstationen T2, T3 und der Servervorrichtung S4 entsprechend in einer Art und Weise wie übliche Daten bzw. Signale einer herkömmlichen Sprachverbindung übertragen.

Die Servervorrichtung S4 weist eine Umsetzungseinrichtung TC auf, um solche Pseudo-PoC-Signalisierungen und Pseudo-PoC-Daten PoC* seitens der Servervorrichtung S4 für die nicht-PoC-fähigen Teilnehmerstationen T2, T3 bereitzustellen und um echte PoC-Signalisierungen und PoC-Daten PoC über die PoC-Schnittstelle I1 zwischen der Servervorrichtung S4 und dem PoC-Kommunikationssystem bereitzustellen und auszutauschen. Die Umsetzungseinrichtung TC kann durch einen entsprechend ausgestalteten Prozessor ausgebildet sein, welcher über einen internen Bus mit den beiden Schnittstellen I1 I2 und weiteren Komponenten der Servervorrichtung S4 verbunden ist. Optional können aber auch alle dieser Komponenten und Funktionalitäten oder einzelne der Komponenten und Funktionalitäten durch einen einzigen Prozessorchip oder gegebenenfalls auch durch weitere ausgelagerte und angeschlossene externe Komponenten bereitgestellt werden. Die Umsetzungseinrichtung TC dient zum Erzeugen von entsprechenden Pseudo-PoC-Signalisierungen und Pseudo-PoC-Daten PoC* einer Sprachkommunikationsverbindung und Ausgeben dieser über die zweite Schnittstelle I2 zum Empfang durch eine der nicht-PoC-fähigen Teilnehmerstationen T2, T3 aufgrund zuvor über die erste Schnittstelle I1 empfangener IP-basierter PoC-Signalisierungen und/oder PoC-Daten. Außerdem dient die Umsetzungseinrichtung TC dazu, in umgekehrter Richtung IP-basierte PoC-Signalisierungen und PoC-Daten für die erste PoC-Schnittstelle I1 zu erzeugen und über diese an das PoC-Kommunikationssystem auszugeben, nachdem über die zweite Schnittstelle I2 Signalisierungen und/oder Daten für eine Pseudo-PoC-Übertragung PoC* empfangen wurden, so dass die eigenständig nicht-PoC-fähigen Teilnehmerstationen T2, T3 für eine PoC-Kommunikations-Verbindung über das PoC-Kommunikationssystem IMS einsetzbar sind.

Wünscht beispielsweise der Teilnehmer U1 der PoC-fähigen Teilnehmerstation T1 eine PoC-Verbindung zu der ersten nicht-PoC-fähigen Teilnehmerstation T2, so wird diese aus Sicht der Teilnehmerstation T1 angewählt, als würde eine PoC-fähige Teilnehmerstation angewählt. Tatsächlich angewählt wird eine Adresse der Servervorrichtung S4, welche als die eigentliche PoC-Teilnehmerstation auftritt. Die Servervorrichtung S4 leitet nachfolgend eine herkömmliche Rufverbindung zu der nicht-PoC-fähigen Teilnehmerstation T2 ein. Nach Abnahme des Hörers durch deren Teilnehmer U2 wird seitens der Servervorrichtung S4 gegenüber dem PoC-Server S3 das Bestehen einer PoC-Verbindung signalisiert, so dass dem Teilnehmer der rufenden PoC-Teilnehmerstation T1 der Token zugesendet werden kann. Nachfolgend bei der Servervorrichtung S4 eintreffende Sprachnachrichten in Form von Sprachdatenpaketen werden von der ersten Schnittstelle I1 auf die zweite Schnittstelle I2 umgesetzt und als herkömmliche Telefonnetzdaten an die gerufene Teilnehmerstation T2 übertragen. Die Beendigung der PoC-Verbindung kann beispielsweise durch Auflegen seitens eines der beiden Teilnehmer U1, U2 erfolgen.

Zur Vermeidung lange stehender Telefonverbindungen über das herkömmliche Telefonnetz PSTN, ISDN oder gegebenenfalls das herkömmliche Mobilfunknetz UMTS, GSM mit entsprechend hohen Leitungsgebühren und einer Blockierung des Telefonanschlusses für weitere Telefonverbindungen wird die Verbindung zu der eigenständig nicht-PoC-fähigen Teilnehmerstation T2, T3 jedoch durch die Servervorrichtung S4 bis zum Eintreffen weiterer Sprachdaten vorzugsweise unterbrochen und beendet. Dazu verwendet die Servervorrichtung S4 z.B. einen Taktgeber CLK, so dass nach Ablauf einer vorbestimmbaren Totzeit seit Eintreffen der letzten PoC-Daten aus dem PoC-Kommunikationssystem die Verbindung zum herkömmlichen Telefonnetz PSTN, ISDN unterbrochen wird. Beim Eintreffen weiterer PoC-Sprachdaten aus dem PoC-Kommunikationssystem baut die Servervorrichtung S4 dann eine Sprachverbindung zu der eigenständig nicht-PoC-fähigen Teilnehmerstation T2, T3 erneut auf. Um die eingetroffenen Sprachdaten bis zum Aufbau der Verbindung nicht zu verlieren, werden diese zweckmäßigerweise in einer Speichereinrichtung M der Servervorrichtung S4 zwischengespeichert und nach dem Verbindungsaufbau mit etwas Zeitversatz übertragen.

Im Falle einer eigenständig nicht-PoC-fähigen Teilnehmerstation T2, welche über beispielsweise einen ISDN-Anschluss über zwei eigenständige Leitungen angerufen werden kann, werden einer solchen Teilnehmerstation T2 vorzugsweise zwei verschiedene Teilnehmernummern T2a: 123-0 und T2b: 123-1 zugewiesen. Die erste der Teilnehmernummern T2a dient zum Aufbau üblicher Sprachverbindungen. Die zweite der Teilnehmernummern T2b dient hingegen zum Aufbau einer Pseudo-PoC-Verbindung PoC*. Dadurch kann von der Servervorrichtung S4 direkt die zweite Teilnehmernummern T2b zum Aufbau einer PoC-Verbindung angewählt werden. Der Teilnehmer U2 der dann gerufenen Teilnehmerstation T2 kann über eine akustische oder optische Signalisierung erkennen, dass es sich um einen PoC-Ruf handelt. Besonders bevorzugt ist insbesondere eine Ausgestaltung mit einer automatischen Rufannahme, welche der zweiten bzw. der dem PoC-Dienst zugewiesenen Teilnehmernummer T2b zugeordnet ist, so dass ein über diese zweite Teilnehmernummer T2b eingehender Ruf direkt angenommen und auf den Lautsprecher L gestellt wird.

Für einen Aufbau einer Pseudo-PoC-Verbindung PoC* seitens einer der nicht-PoC-fähigen Teilnehmerstationen T2, T3 wird von derem Teilnehmer U2, U3 eine Telefonnummer gewählt, welche der Servervorrichtung S4 bzw. der zweiten Schnittstelle I2 der Servervorrichtung S4 zugeordnet ist. Die Servervorrichtung S4 erkennt den Wunsch zum Aufbau einer PoC-Verbindung PoC über das PoC-Kommunikationssystem und baut über die PoC-Schnittstelle I1 eine entsprechende PoC-Verbindung in dem PoC-Kommunikationssystem IMS auf. Um der Servervorrichtung S4 mitzuteilen, zu welcher anderen Teilnehmerstation T1 eine PoC-Verbindung aufzubauen ist, können je nach Art der rufenden Teilnehmerstation T2, T3 deren Impulssignale oder Mehrfrequenztöne durch entsprechende Eingaben auf der Tastatur T der rufenden Teilnehmerstation T2, T3 zur Servervorrichtung S4 übermittelt werden. Die Servervorrichtung S4 setzt diese empfangenen Signalisierungen dann mittels der Umsetzungseinrichtung TC und/oder eines Mehrfrequenzton-Moduls MFA um.

Gemäß einer besonders bevorzugten Ausgestaltung weist die Servervorrichtung S4 ein Sprachanalysemodul SA oder eine entsprechende Funktionalität der Umsetzungseinrichtung TC auf. Das Sprachanalysemodul SA analysiert empfangene Sprachsignale des Teilnehmers U2, U3 nach Schlüsselworten, wie z.B. "Talk" oder "Over", welche als Codeworte bzw. Kommandos für das Anfordern einer Spracherlaubnis bzw. für das Abgeben der Spracherlaubnis für sich genommen aus der Benutzung von Walkie-Talkies bekannt sind. Wird durch die Sprachanalyse das Kennwort "Talk" erkannt, so wird die gleiche Signalisierung veranlasst, als würde der entsprechende Benutzer U2, U3 die P2T-Taste P2T drücken und gedrückt halten. Durch das spätere Erkennen des Kommandos "Over" in dem Sprachsignal wird ein Ende des Drückens der P2T-Taste P2T simuliert und eine entsprechende Funktionalität beendet. Der Benutzer, der eigenständig nicht-PoC-fähigen Teilnehmerstation T2, T3 kann dadurch mittels Sprachbefehlen eine Steuerung von PoC-Funktionalitäten bewirken.

Vorrichtungs- und verfahrensgemäß wird somit ein Server als Gateway-Servervorrichtung S4 oder als eine andere Vorrichtung mit vergleichbarer Funktionalität bereitgestellt, welche zur einen Seite einen Sprachanruf (Voice-Call) zu beliebigen Telefonen über insbesondere eine leitungsgebundene Verbindung terminiert und welche auf der anderen Seite als PoC-Client arbeitet und den Teilnehmer des "normalen" Telefones in einer PoC-Session vertritt. Die Servervorrichtung kann auch so ausgeprägt sein, dass er das "normale" Telefon bei entsprechenden Aktivitäten in der PoC-Session anruft und den Teilnehmer des die entsprechende Teilnehmerstation T2, T3 ausbildenden Telefons informiert hält. Insbesondere kann über Sprachinformationen auch über das Öffnen oder Schließen der PoC-Session und über neue oder ausgeschiedene Teilnehmer der PoC-Session informiert werden. Ein solches Rückrufen würde auch dafür sorgen, dass die Kosten, welche bei leitungsgebundenen Verbindungen auf Zeitbasis berechnet werden, im Rahmen bleiben. Die Servervorrichtung S4 kann vom Operator des PoC-Kommunikationssystems als ein sogenannter Call-in-Service (Einwähldienst) angeboten werden, wobei eine PoC-Session, an welcher der Teilnehmer U2, U3 teilnehmen will, durch eine Identifikationsnummer kennzeichenbar ist, wie dies benutzerseitig für sich genommen von Konferenzschaltungen her bekannt ist. Das PoC-Kommunikationssystem kann ein beliebiges IPbasiertes Datennetz mit entsprechenden Funktionalitäten sein.

Nachfolgend werden kurz einzelne, für das Verständnis besonders hervorhebbare Aspekte wiederholt. Der Teilnehmer U1 am ersten Terminal bzw. der ersten Teilnehmerstation T1 besitzt ein PoC-fähiges Mobiltelefon oder wird über eine solche Servervorrichtung angerufen. Der Teilnehmer U2, U3 am zweiten Terminal bzw. der zweiten Teilnehmerstation T2, T3 besitzt ein Festnetztelefon oder Mobilfunktelefon, welches nicht-PoC-fähig ist. Die Servervorrichtung S4 bildet einen Gateway-Server, welcher den zweiten Teilnehmer U2, U3 bzw. dessen Teilnehmerstation T2, T3 mit einem PoC-Server S3 verbindet und somit die Teilnahme an einer PoC-Session PoC ermöglicht. In üblicher Art und Weise weist das PoC-Kommunikationssystem IMS bzw. dessen Netz einen Proxy-Server S1 und einen Serving-Server S2 auf, wie diese beispielsweise von 3GPP für IMS spezifiziert sind.

Ein erstes Ablaufbeispiel stellt den Verbindungsaufbau durch eine PoC-fähige Teilnehmerstation T1 mit einer Einladung einer nicht-PoC-fähigen Teilnehmerstation T2 dar. Auf dem PoC-Server S3 läuft für die zweite Teilnehmerstation T2 beispielsweise bereits ein Session Initiation Protocol User Agent (SIP UA, Sitzungs-Initialisierungs-Protokoll-Teilnehmeragent), welcher sich als Teilnehmer U2 im PoC-Kommunikationssystem IMS angemeldet hat. Der erste Teilnehmer U1 an der ersten Teilnehmerstation T1 eröffnet eine PoC-Session mittels einer SIP-Einladung (SIP-Invite) und lädt dabei den zweiten Teilnehmer U2 bzw. dessen Teilnehmerstation T2 ein. Der PoC-Server S3 richtet die Einladung an die Servervorrichtung S4, welche die zweite Teilnehmerstation T2 anruft. Nimmt der Teilnehmer U2 an der zweiten Teilnehmerstation T2 ab, bestätigt die Servervorrichtung S4 die Annahme der PoC-Session. Die beiden Teilnehmer U1, U2 sind nachfolgend über eine PoC-Session verbunden. Der zweite Teilnehmer U2 kann dabei die PoC-Session bzw. auf seiner Seite die Pseudo-PoC-Session PoC* über beispielsweise die Eingabe von Mehrfrequenztönen steuern, um ein Token anzufordern oder abzugeben. Aktionen des ersten Teilnehmers U1 werden an den zweiten Teilnehmer U2 mittels der Servervorrichtung S4 über beispielsweise Sprachhinweise weitergeleitet.

Gemäß einem weiteren Ablaufbeispiel in umgekehrter Verbindungsaufbaurichtung wünscht ein zweiter Teilnehmer U2 mittels seines eigenständig nicht-PoC-fähigen Telefones als zweiter Teilnehmerstation T2 eine Verbindung zum Teilnehmer U1 der ersten, PoC-fähigen Teilnehmerstation T1 aufzubauen und diese anzurufen. Dazu wird von der zweiten Teilnehmerstation T2 die Servervorrichtung S4 angerufen. Mittels Mehrfrequenztönen oder anderen Signalisierungsmitteln kann eine PoC-Session mit dem gewünschten Teilnehmer oder gegebenenfalls auch mit vordefinierten Gruppen initiiert werden. Dazu schickt die Servervorrichtung S4 eine entsprechende Einladung über den Proxy-Server S1 und den Serving-Server S2 an den PoC-Server S3. Dieser leitet die Einladung über den Serving-Server S2 und den Proxy-Server S1 an die gerufene erste Teilnehmerstation T1 weiter. Nimmt der Teilnehmer U1 der ersten Teilnehmerstation T1 die Einladung an, befinden sich die beiden Teilnehmerstationen T1, T2 nachfolgend in einer PoC-Session bzw. in einer Pseudo-PoC-Session PoC*. Die Steuerung bzw. Beendigung kann wie beschrieben erfolgen.

## Patentansprüche

1. PoC-Kommunikationssystem mit
- einem PoC-Server (S3) zum Koordinieren einer PoC-Kommunikation zwischen PoC-fähigen Teilnehmerstationen (T1) und
- einem Server (S1, S2) zum Aufbauen und Koordinieren von IP- basierten Verbindungen im Kommunikationssystem,
**gekennzeichnet durch,**
- eine Servervorrichtung (S4) mit
- einer ersten Schnittstelle als einer PoC-Schnittstelle (11) zum Austauschen von PoC-bezogenen Signalisierungen (SIP) und PoC-bezogenen Daten (PoC, RTP/AMR) in Art eines PoC-Client,
- einer zweiten Schnittstelle (I2) zum Austauschen von nicht-PoC-System-basierter Signalisierung und Daten einer Sprachkommunikationsverbindung und
- einer Umsetzungseinrichtung (TC) zum Erzeugen von Signalisierung und Daten einer Sprachkommunikationsverbindung und Ausgeben dieser über die zweite Schnittstelle (I2) zum Empfang **durch** eine eigenständig nicht-PoC-fähige Teilnehmerstation (T2, T3) nach Empfang von IP-basierter PoC-Signalisierung bzw. PoC-Daten **durch** die erste PoC-Schnittstelle (I1) und/oder zum Erzeugen von IP-basierter PoC-Signalisierung und PoC-Daten zum Ausgeben dieser über die erste PoC-Schnittstelle (I1) an das PoC- Kommunikationssystem nach Empfang von Signalisierung und/oder Daten für PoC-Übertragungen durch die zweite Schnittstelle (I2), so dass die eigenständig nicht-PoC-fähige Teilnehmerstation (T2, T3) für eine PoC-Kommunikation über das PoC-Kommunikationssystem einsetzbar ist.

2. PoC-Kommunikationssystem nach Anspruch 1, mit Servern (S1, S2) zur SIP-basierten Signalisierung zum Verbindungsaufbau und zur RTP-Datenübertragung zur Sprachdatenübertragung.

3. PoC-Kommunikationssystem nach Anspruch 1 oder 2, bei dem die nicht-PoC-fähige Teilnehmerstation (T2) ein Telefon eines leitungsgebundenen Telefonnetzes (PSTN; ISDN) ist.

4. PoC-Kommunikationssystem nach Anspruch 1 oder 2, bei dem die nicht-PoC-fähige Teilnehmerstation (T3) ein Mobilfunkgerät eines Mobilfunknetzes (GSM; UMTS) ist.

5. PoC-Kommunikationssystem nach einem vorstehenden Anspruch, bei dem die Umsetzungseinrichtung (TC) mit PoC-Funktionalität als PoC-Client für die PoC-Kommunikation über die erste Poc-Schnittstelle (I1) und mit Telefon- oder Mobilfunktelefon- Funktionalität für eine Pseudo-PoC-Kommunikation (PoC*) über die zweite Schnittstelle (I2) ausgebildet ist.

6. PoC-Kommunikationssystem nach einem vorstehenden Anspruch, bei dem die Umsetzungseinrichtung (TC) einen Zeitgeber (CLK) zum Beschränken der Dauer einer Verbindung zu der nicht-Poc-fähigen Teilnehmerstation (T2; T3) aufweist.

7. PoC-Kommunikationssystem nach einem vorstehenden Anspruch, mit einem Speicher (M) zum Zwischenspeichern von PoC-Daten für die nicht-PoC-fähige Teilnehmerstation (T2; T3) bis zum Aufbau einer Sprachkommunikations-Verbindung als Pseudo-PoC-Verbindung (PoC*) .

8. PoC-Kommunikationssystem nach einem vorstehenden Anspruch, mit einem Mehrfrequenzton-Modul zum Empfangen von Mehrfrequenztonsignalen über die zweite Schnittstelle (12) und zum Analysieren der Mehrfrequenztonsignale als Pseudo-PoC-Steuersignale der nicht-PoC-fähigen Teilnehmerstation (T2; T3).

9. PoC-Kommunikationssystem nach einem vorstehenden Anspruch mit einem Sprach-Analyse-Modul (SA) zum Empfangen von Sprache über die zweite Schnittstelle (I2) und zum Analysieren der Sprache als Pseudo-PoC-Steuersignal der nicht-PoC-fähigen Teilnehmerstation (T2; T3) .

10. Verfahren zum Übertragen einer PoC-Signalisierung (SIP) und/oder von Poe-Daten (PoC, RTP), insbesondere zum Steuern einer Servervorrichtung (S4) eines PoC-Kommunikationssystems (IMS) nach einem vorstehenden Anspruch, bei dem
- eine PoC-Kommunikations-Verbindung (PoC) zwischen PoC-Clienten (T1) aufgebaut wird zum Übertragen von PoC-Daten mit Sprachinformationsgehalt für Sprachübertragung und
- durch zumindest einen solcher PoC-Clienten über eine PoC- Schnittstelle (I1) PoC-Signalisierung und/oder PoC-Daten der PoC-Kommunikations-Verbindung gesendet und/oder empfangen werden,
**dadurch gekennzeichnet, dass**
- durch den Clienten über eine zweite Schnittstelle (12) Signalisierungen und/oder Daten an eine nicht-PoC-fähige Teilnehmerstation (T2; T3) gesendet und/oder empfangen werden und
- der Client (S3) abhängig von Signalisierungen und/oder Daten der einen der Schnittstellen (I1; I2) geeignete Signalisierungen und/oder Daten der anderen der schnittstellen (I2; 11) erzeugt, um die nicht-PoC-fähige Teilnehmerstation (T2; T3) zum Senden und/oder Empfangen von Pseudo-PoC-Kommunikation anzusteuern.

11. Verfahren nach Anspruch 10, bei dem Signalisierungen und Daten für eine Sprachkommunikations-Verbindung erzeugt und über die zweite Schnittstelle (I2) ausgegeben werden aufgrund von IP-basierter PoC-Signalisierung und/oder IP-basierter PoC-Daten, welche über die PoC-Schnittstelle (I1) empfangen werden.

12. verfahren nach Anspruch 10 oder 11, bei dem eine PoC-Signalisierung und/oder PoC-Daten für eine PoC-Kommunikations-Verbindung erzeugt und über die PoC-Schnittstelle (I1) ausgegeben werden aufgrund von Signalen und/oder Daten einer Sprachkommunikations-Verbindung, welche über die zweite Schnittstelle (I2) empfangen werden.

13. Verfahren nach einem der Ansprüche 10 bis 12, bei dem gegenüber der PoC-Kommunikations-Verbindung PoC-Signalisierung und/oder PoC-Daten empfangen und in Art eines PoC-Client verarbeitet werden und umgesetzt werden in Signalisierungen und Daten für ein eigenständig nicht-PoC-fähiges Festnetztelefon als der nicht-PoC-fähigen Teilnehmerstation (T2), insbesondere für ein ISDN-Telefon.

14. verfahren nach einem der Ansprüche 10 bis 13, bei dem gegenüber der PoC-Kommunikations-Verbindung PoC-Signalisierung und/oder PoC-Daten empfangen und in Art eines PoC-Client verarbeitet werden und umgesetzt werden in Signalisierungen und Daten für ein eigenständig nicht-PoC-fähiges Mobilfunkgerät (T3) als der nicht-PoC-fähigen Teilnehmerstation (T3).

15. Verfahren nach einem der Ansprüche 10 bis 14, bei dem über die zweite Schnittstelle (12) zum nachfolgenden Übertragen von PoC-Daten eine leitungsgebundene Telefonverbindung, insbesondere eine Sprach-Kommunikations-Verbindung (ISDN) zur nicht-PoC-fähigen Teilnehmerstation (T2; T3) aufgebaut wird und nachfolgend PoC-Daten an die Teilnehmerstation (T2; T3) weitergeleitet werden.

16. Verfahren nach einem der Ansprüche 10 bis 15, bei dem zum Aufbau einer Telefonverbindung, insbesondere Sprach-Kommunikations-Verbindung (ISDN) eine für PoC-Kommunikations-Verbindungen reservierte und zugeteilte zweite Telefonnummer (T2b) der eigenständig nicht-PoC-fähigen Teilnehmerstation (T2) angewählt wird.

17. Verfahren nach einem der Ansprüche 10-16, bei dem eine angewählte Telefonnummer, insbesondere die zweite Telefonnummer (T2b) einer automatischen Rufannahme-Funktion der eigenständig nicht-PoC-fähigen Teilnehmerstation (T2) zugeordnet ist.

18. Verfahren nach einem der Ansprüche 10 bis 17, bei dem zwischen dem Client (S4) und der eigenständig nicht-PoC-fähigen Teilnehmerstation (T2; T3) eine Telefonverbindung nur für eine Dauer tatsächlich zur Übertragung vorliegender PoC-Daten und/oder im Falle des Ausbleibens von in einer der Übertragungsrichtungen übertragener Daten und/oder Signalisierungen nur für eine vorgegebene Dauer aufgebaut wird.

19. Verfahren nach einem der Ansprüche 10 bis 18, bei dem durch den Clienten (S4) empfangene PoC-Daten zwischengespeichert werden bis zum Aufbau einer Telefonverbindung zu der eigenständig nicht-PoC-fähigen Teilnehmerstation (T2; T3) .

20. Verfahren nach einem der Ansprüche 10 bis 19, bei dem der Client (S4) von der eigenständig nicht-PoC-fähigen Teilnehmerstation (T2; T3) empfangene Signale, insbesondere Mehrfrequenztonsignale als Steuersignale zum Aufbauen, Verwalten oder Beenden einer PoC-Kommunikations-Verbindung interpretiert und entsprechende PoC- Signalisierungen und/oder PoC-Daten erzeugt und über die PoC- Schnittstelle (I1) austauscht.

21. Verfahren nach einem der Ansprüche 10 bis 20, bei dem der Client (S3) von der eigenständig nicht-PoC-fähigen Teilnehmerstation (T2; T3) empfangene Sprachsignale, insbesondere Sprachdaten analysiert und vorbestimmte Sprachanweisungen als Steuersignale zum Aufbauen, Verwalten oder Beenden einer PoC-Kommunikations-Verbindung interpretiert und entsprechende PoC-Signalisierungen und/oder PoC-Daten erzeugt und über die PoC-Schnittstelle (I1) austauscht.

22. Servervorrichtung (S4) zum Anschließen einer eigenständig nicht-PoC-fähigen Teilnehmerstation (T2, T3) eines Kommunikationsnetzes (PSTN; ISDN; GSM) für eine Pseudo-PoC-Kommunikation an ein PoC-Kommunikationssystem (IMS), mit
- einer ersten Schnittstelle (I1) als einer PoC-Schnittstelle zum Aufbauen einer PoC-Verbindung (PoC) zu dem PoC-Kommunikationssystem (IMS) in Art eines PoC-Clienten,
- einer zweiten Schnittstelle (12) zum Aufbauen einer Pseudo- PoC-Verbindung (PoC*) zu der eigenständig nicht-PoC-fähigen Teilnehmerstation (T2; T3) in Art einer Sprachkommunikations-Verbindung und
- einer Umsetzungseinrichtung (TC) zum Umsetzen von PoC- Signalisierungen und PoC-Daten der PoC-Verbindung (PoC) in Signale und Daten der Pseudo-PoC-Verbindung (PoC*) und umgekehrt.

## Claims

1. PoC communication system having
- a PoC server (S3) for coordinating a PoC communication between PoC-compatible subscriber stations (T1) and
- a server (S1, S2) for setting up and coordinating IP-based connections in the communication system,
**characterized by**
- a server apparatus (S4) having
- a first interface as a PoC interface (I1) for interchanging PoC-related signalling (SIP) and PoC-related data (PoC, RTP/AMR) in the manner of a PoC client,
- a second interface (I2) for interchanging non-PoC-system-based signalling and data from a voice communication link, and
- a conversion device (TC) for producing signalling and data from a voice communication link and outputting same via the second interface (I2) for reception by an independently non-PoC-compatible subscriber station (T2, T3) following reception of IP-based PoC signalling or PoC data by the first PoC interface (I1) and/or for producing IP-based PoC signalling and PoC data for outputting the same via the first PoC interface (I1) to the PoC communication system following reception of signalling and/or data for PoC transmissions by the second interface (I2), so that the independently non-PoC-compatible subscriber station (T2, T3) can be used for a PoC communication via the PoC communication system.

2. PoC communication system according to Claim 1, having servers (S1, S2) for SIP-based signalling for connection setup and for RTP data transmission for voice data transmission.

3. PoC communication system according to Claim 1 or 2, in which the non-PoC-compatible subscriber station (T2) is a telephone in a wired telephone network (PSTN; ISDN).

4. PoC communication system according to Claim 1 or 2, in which the non-PoC-compatible subscriber station (T3) is a mobile radio in a mobile radio network (GSM; UMTS).

5. PoC communication system according to one of the preceding claims, in which the conversion device (TC) is designed with PoC functionality as a PoC client for the PoC communication via the first PoC interface (I1) and with telephone or mobile radio telephone functionality for a pseudo-PoC communication (PoC*) via the second interface (I2) .

6. PoC communication system according to one of the preceding claims, in which the conversion device (TC) has a timer (CLK) for limiting the duration of a connection to the non-PoC-compatible subscriber station (T2; T3).

7. PoC communication system according to one of the preceding claims, having a memory (M) for buffer-storing PoC data for the non-PoC-compatible subscriber station (T2; T3) until setup of a voice communication link as a pseudo-PoC connection (PoC*).

8. PoC communication system according to one of the preceding claims, having a multifrequency tone module for receiving multifrequency tone signals via the second interface (I2) and for analysing the multifrequency tone signals as pseudo-PoC control signals from the non-PoC-compatible subscriber station (T2; T3).

9. PoC communication system according to one of the preceding claims, having a voice analysis module (SA) for receiving voice via the second interface (I2) and for analysing the voice as a pseudo-PoC control signal from the non-PoC-compatible subscriber station (T2; T3).

10. Method for transmitting PoC signalling (SIP) and/or PoC data (PoC, RTP), particularly for controlling a server apparatus (S4) in a PoC communication system (IMS) as claimed in one of the preceding claims, in which
- a PoC communication link (PoC) is set up between PoC clients (T1) for the purpose of transmitting PoC data with a voice information content for voice transmission, and
- at least one such PoC client uses a PoC interface (I1) to send and/or receive PoC signalling and/or PoC data from the PoC communication link,
**characterized in that**
- the client uses a second interface (I2) to send and/or receive signalling and/or data to a non-PoC-compatible subscriber station (T2; T3), and
- the client (S3) takes signalling and/or data from one of the interfaces (I1; I2) as a basis for producing suitable signalling and/or data from the other of the interfaces (I2; I1) in order to actuate the non-PoC-compatible subscriber station (T2; T3) to send and/or receive pseudo-PoC communication.

11. Method according to Claim 10, in which signalling and data are produced for a voice communication link and are output via the second interface (I2) on the basis of IP-based PoC signalling and/or IP-based PoC data which are received via the PoC interface (I1).

12. Method according to Claim 10 or 11, in which PoC signalling and/or PoC data is/are produced for a PoC communication link and is/are output via the PoC interface (I1) on the basis of signals and/or data from a voice communication link which are received via the second interface (I2).

13. Method according to one of Claims 10 to 12, in which PoC signalling and/or PoC data is/are received for the PoC communication link and is/are processed in the manner of a PoC client and is/are converted into signalling and data for an independently non-PoC-compatible landline telephone as the non-PoC-compatible subscriber station (T2), particularly for an ISDN telephone.

14. Method according to one of Claims 10 to 13, in which PoC signalling and/or PoC data is/are received for the PoC communication link and is/are processed in the manner of a PoC client and is/are converted into signalling and data for an independently non-PoC-compatible mobile radio (T3) as the non-PoC-compatible subscriber station (T3).

15. Method according to one of Claims 10 to 14, in which the second interface (12) is used to set up a wired telephone link, particularly a voice communication link (ISDN) for the non-PoC-compatible subscriber station (T2; T3), for the subsequent transmission of PoC data, and then PoC data are forwarded to the subscriber station (T2; T3).

16. Method according to one of Claims 10 to 15, in which a second telephone number (T2b), which is reserved for and allocated to PoC communication links, for the independently non-PoC-compatible subscriber station (T2) is dialled in order to set up a telephone link, particularly a voice communication link (ISDN).

17. Method according to one of Claims 10-16, in which a dialled telephone number, particularly the second telephone number (T2b), is associated with an automatic call acceptance function of the independently non-PoC-compatible subscriber station (T2).

18. Method according to one of Claims 10 to 17, in which the client (S4) and the independently non-PoC-compatible subscriber station (T2; T3) have a telephone link set up between them only for a period of PoC data which are actually available for transmission and/or only for a prescribed period in the event of the absence of data and/or signalling transmitted in one of the transmission directions.

19. Method according to one of Claims 10 to 18, in which PoC data received by the client (S4) are buffer-stored until a telephone link to the independently non-PoC-compatible subscriber station (T2; T3) is set up.

20. Method according to one of Claims 10 to 19, in which the client (S4) interprets signals, particularly multifrequency tone signals, received from the independently non-PoC-compatible subscriber station (T2; T3) as control signals for setting up, managing or terminating a PoC communication link and produces appropriate PoC signalling and/or PoC data and interchanges it/them via the PoC interface (I1).

21. Method according to one of Claims 10 to 20, in which the client (S3) analyses voice signals, particularly voice data, received from the independently non-PoC-compatible subscriber station (T2; T3) and interprets predetermined voice instructions as control signals for setting up, managing or terminating a PoC communication link and produces appropriate PoC signalling and/or PoC data and interchanges it/them via the PoC interface (I1).

22. Server apparatus (S4) for connecting an independently non-PoC-compatible subscriber station (T2, T3) in a communication network (PSTN; ISDN; GSM) for a pseudo-PoC communication to a PoC communication system (IMS), having
- a first interface (I1) as a PoC interface for setting up a PoC connection (PoC) to the PoC communication system (IMS) in the manner of a PoC client,
- a second interface (I2) for setting up a pseudo-PoC connection (PoC*) to the independently non-PoC-compatible subscriber station (T2; T3) in the manner of a voice communication link, and
- a conversion device (TC) for converting PoC signalling and PoC data from the PoC connection (PoC) into signals and data from the pseudo-PoC connection (PoC*) and vice versa.

## Revendications

1. Système de communication PoC comprenant
- un serveur PoC (S3) permettant de coordonner une communication PoC entre des stations d'abonnés compatibles PoC (T1) et
- un serveur (S1, S2) permettant d'établir et de coordonner des liaisons basées IP dans le système de communication,
**caractérisé par**
- un dispositif serveur (S4) comprenant
- une première interface en tant qu'interface PoC (I1) permettant d'échanger des signalisations basées PoC (SIP) et des données basées PoC (PoC, RTP/AMR) à la manière d'un client PoC,
- une seconde interface (I2) permettant d'échanger une signalisation non basée système PoC et des données d'une liaison de communication vocale, et
- un dispositif de conversion (TC) permettant de produire une signalisation et des données d'une liaison de communication vocale et d'émettre celles-ci via la seconde interface (I2) pour réception par une station d'abonné autonome non compatible PoC (T2, T3) après réception d'une signalisation PoC basée IP resp. de données PoC par la première interface PoC (I1), et/ou de produire une signalisation PoC basée IP et des données PoC pour émission de celles-ci via la première interface PoC (I1) vers le système de communication PoC après réception d'une signalisation et/ou de données pour des transmissions PoC par la seconde interface (I2), de sorte que la station d'abonné autonome non compatible PoC (T2, T3) peut être utilisée pour une communication PoC par l'intermédiaire du système de communication PoC.

2. Système de communication PoC selon la revendication 1, comprenant des serveurs (S1, S2) de signalisation basée SIP permettant l'établissement de la liaison et la transmission de données RTP pour la transmission de données vocales.

3. Système de communication PoC selon la revendication 1 ou 2, dans lequel la station d'abonné non compatible PoC (T2) est un téléphone d'un réseau téléphonique filaire (PSTN ; ISDN).

4. Système de communication PoC selon la revendication 1 ou 2, dans lequel la station d'abonné non compatible PoC (T3) est un appareil radio mobile d'un réseau radio mobile (GSM ; UMTS).

5. Système de communication PoC selon l'une des revendications précédentes, dans lequel le dispositif de conversion (TC) est réalisé avec la fonction PoC en tant que client PoC pour la communication PoC via la première interface PoC (I1) et avec la fonction téléphone ou téléphone radio mobile pour une pseudo-communication PoC (PoC*) via la seconde interface (I2).

6. Système de communication PoC selon l'une des revendications précédentes, dans lequel le dispositif de conversion (TC) comporte une horloge (CLK) permettant de limiter la durée d'une liaison vers la station d'abonné non compatible PoC (T2 ; T3).

7. Système de communication PoC selon l'une des revendications précédentes, comprenant une mémoire (M) permettant le stockage intermédiaire de données PoC pour la station d'abonné non compatible PoC (T2 ; T3) jusqu'à l'établissement d'une liaison de communication vocale en tant que pseudo-liaison PoC (PoC*).

8. Système de communication PoC selon l'une des revendications précédentes, comprenant un module de tonalité multifréquence permettant de recevoir des signaux de tonalité multifréquence via la seconde interface (I2) et d'analyser les signaux de tonalité multifréquence en tant que pseudo-signaux de commande PoC de la station d'abonné non compatible PoC (T2 ; T3).

9. Système de communication PoC selon l'une des revendications précédentes, comprenant un module d'analyse vocale (SA) permettant de recevoir la voix via la seconde interface (I2) et d'analyser la voix en tant que pseudo-signal de commande PoC de la station d'abonné non compatible PoC (T2 ; T3).

10. Procédé de transmission d'une signalisation PoC (SIP) et/ou de données PoC (PoC, RTP), notamment pour commander un dispositif serveur (S4) d'un système de communication PoC (IMS) selon l'une des revendications précédentes, dans lequel
- une liaison de communication PoC (PoC) est établie entre des clients PoC (T1), permettant de transmettre des données PoC contenant des informations vocales pour la transmission vocale et
- par au moins un desdits clients PoC, une signalisation PoC et/ou des données PoC de la liaison de communication PoC sont envoyées et/ou reçues via une interface PoC (I1),
**caractérisé en ce que**
- par ledit client, via une seconde interface (I2), des signalisations et/ou des données sont envoyées à et/ou reçues par une station d'abonné non compatible PoC (T2 ; T3) et
- le client (S3), en fonction de signalisations et/ou de données de ladite une des interfaces (I1 ; I2), produit des signalisations et/ou des données appropriées de ladite autre des interfaces (I2 ; I1) pour appeler la station d'abonné non compatible PoC (T2 ; T3) à envoyer et/ou à recevoir une pseudo-communication PoC.

11. Procédé selon la revendication 10, dans lequel des signalisations et des données pour une liaison de communication vocale sont produites puis émises via la seconde interface (I2) suite à une signalisation POC basée IP et/ou des données POC basées IP, reçues via l'interface PoC (I1).

12. Procédé selon la revendication 10 ou 11, dans lequel une signalisation PoC et/ou des données PoC pour une liaison de communication PoC sont produites puis émises via l'interface PoC (I1) suite à des signaux et/ou des données d'une liaison de communication vocale, reçus via la seconde interface (I2).

13. Procédé selon l'une des revendications 10 à 12, dans lequel, par rapport à la liaison de communication PoC, une signalisation PoC et/ou des données PoC sont reçues et traitées à la manière d'un client PoC et converties en signalisations et données pour un téléphone de réseau fixe autonome non compatible PoC en tant que station d'abonné non compatible PoC (T2), en particulier pour un téléphone ISDN.

14. Procédé selon l'une des revendications 10 à 13, dans lequel, par rapport à la liaison de communication PoC, une signalisation PoC et/ou des données PoC sont reçues et traitées à la manière d'un client PoC et converties en signalisations et données pour un appareil radio mobile autonome non compatible PoC (T3) en tant que station d'abonné non compatible PoC (T3).

15. Procédé selon l'une des revendications 10 à 14, dans lequel, via la seconde interface (I2) pour la transmission subséquente de données PoC, une liaison téléphonique filaire, en particulier une liaison de communication vocale (ISDN) est établie vers la station d'abonné non compatible PoC (T2 ; T3), puis des données PoC sont transmises à cette station d'abonné (T2 ; T3).

16. Procédé selon l'une des revendications 10 à 15, dans lequel, pour établir une liaison téléphonique, en particulier une liaison de communication vocale (ISDN), un second numéro de téléphone (T2b), attribué et réservé aux liaisons de communication PoC, de la station d'abonné autonome non compatible PoC (T2) est sélectionné.

17. Procédé selon l'une des revendications 10 à 16, dans lequel un numéro de téléphone sélectionné, en particulier le second numéro de téléphone (T2b), est attribué à une fonction d'acceptation d'appel automatique de la station d'abonné autonome non compatible PoC (T2).

18. Procédé selon l'une des revendications 10 à 17, dans lequel, entre le client (S4) et la station d'abonné autonome non compatible PoC (T2 ; T3), une liaison téléphonique est établie uniquement pour une durée permettant la transmission de données PoC réellement présentes et/ou en cas d'absence de données et/ou de signalisations transmises dans l'un des sens de transmission, uniquement pour une durée prédéfinie.

19. Procédé selon l'une des revendications 10 à 18, dans lequel des données PoC reçues par le client (S4) sont stockées temporairement jusqu'à l'établissement d'une liaison téléphonique vers la station d'abonné autonome non compatible PoC (T2 ; T3).

20. Procédé selon l'une des revendications 10 à 19, dans lequel le client (S4) interprète des signaux reçus par la station d'abonné autonome non compatible PoC (T2 ; T3), en particulier des signaux de tonalité multifréquence, comme signaux de commande pour établir, gérer et terminer une liaison de communication PoC et produit des signalisations PoC et/ou des données PoC correspondantes et les échange via l'interface PoC (I1).

21. Procédé selon l'une des revendications 10 à 20, dans lequel le client (S3) analyse des signaux vocaux reçus par la station d'abonné autonome non compatible PoC (T2 ; T3), en particulier des données vocales, et interprète des instructions vocales prédéterminées comme signaux de commande pour établir, gérer et terminer une liaison de communication PoC et produit des signalisations PoC et/ou des données PoC correspondantes et les échange via l'interface PoC (I1) .

22. Dispositif serveur (S4) permettant de raccorder une station d'abonné autonome non compatible PoC (T2, T3) d'un réseau de communication (PSTN ; ISDN ; GSM) à un système de communication PoC (IMS) pour une pseudo-communication PoC, comprenant
- une première interface (I1) en tant qu'interface PoC permettant d'établir une liaison PoC (PoC) vers le système de communication PoC (IMS) à la manière d'un client PoC,
- une seconde interface (I2) permettant d'établir une pseudo-liaison PoC (PoC*) vers la station d'abonné autonome non compatible PoC (T2 ; T3) à la manière d'une liaison de communication vocale et
- un dispositif de conversion (TC) permettant de convertir des signalisations PoC et des données PoC de la liaison PoC (PoC) en signaux et données de la pseudo-liaison PoC (PoC*) et vice versa.
